# EUROPÄISCHE PATENTANMELDUNG

(11) **EP 0 871 148 A2**
(43) Veröffentlichungstag der Anmeldung: **14.10.1998**
(21) Anmeldenummer: 98103866.4
(22) Anmeldetag: 05.03.1998
(51) Int. Cl.: G07C 9/00

(54) **Authentisierung bei Multimedia-Endgeräten durch elektronischen Fingerabdruck**

(30) Priorität: 14.03.1997 DE 19710546
(71) Anmelder: GRUNDIG Aktiengesellschaft, 90762 Fürth (DE)
(72) Erfinder: Herfet, Thorsten, Dr., 90762 Fürth (DE)

(57) **Zusammenfassung**

Die Erfindung betrifft ein Endgerät zur Teilnahme an Diensten, die einer Zugangsberechtigung unterliegen. Als Schlüssel zur Aktivierung des Zugangs zu derartigen Diensten wird vorgeschlagen, daß das Endgerät den elektronischen Fingerabdruck eines Benutzers auswertet und mit im Endgerät gespeicherten Fingerabdrücken einer Datenbank vergleicht. Bei einer vorteilhaften Ausgestaltungsform ist die Aufnahmeeinheit zur Aufnahme des Fingerabdrucks in dem Ein-/Ausschalter des Endgeräts integriert.

## Beschreibung

Die Erfindung betrifft ein Endgerät zur Teilnahme an Diensten gemäß dem Oberbegriff des Patentanspruchs 1.

Ein derartiges Endgerät kommt beispielsweise im Bereich der Informationstechnik, insbesondere bei Consumer-Elektronik zum Einsatz. Das Endgerät, beispielsweise eine sogenannte Set-Top-Box oder ein entsprechend ausgerüstetes Fernsehgerät ist in der Lage, an kostenpflichtigen, möglicherweise auch interaktiven Diensten teilzunehmen. Die Abrechnung solcher kostenpflichtiger Dienste erfolgt entweder durch eine Chipkarte oder beispielsweise auch auf elektronischem Weg über ein an das Endgerät koppelbares Telefonnetz.

Aus DE 93 04 488 U1 ist ein Fernsprechhandapparat bekannt, der ein biometrisches Abtastsystem aufweist, wobei das biometrische Abtastsystem aus einem Fenster, aus einer Optik, einem Bildaufnahmesensor und einer das Fenster anstrahlenden Lichtquelle besteht. In einem dem Handapparat zugeordneten Speicher sind biometrische Daten von zur Benutzung des Handapparats berechtigten Personen für einen Vergleich mit Daten gespeichert, die durch das biometrische Abtastsystem bei einer aktuellen Benutzung des Handapparats gebildet werden.

Der Erfindung liegt die Aufgabe zugrunde, ein Endgerät der eingangs genannten Art anzugeben, bei dem auf einfache Weise eine automatische Authentisierung des Benutzers erfolgt.

Diese Aufgabe wird bei einem Endgerät der eingangs genannten Art durch die im Patentanspruch 1 angegebenen Merkmale gelöst. Bisher bekannte Lösungen, wie z. B. persönliche Geheimzahl (PIN) sind mit verschiedenen Nachteilen behaftet. So kann einerseits eine derartige Geheimzahl vergessen werden, während andererseits im Falle einer Chipkarte diese verloren werden kann und somit ein Mißbrauch durch einen unberechtigten Benutzer möglich wird. Bei der vorliegenden Erfindung hingegen erfolgt eine Aktivierung und/oder Deaktivierung der Zugangsberechtigung mit Hilfe einer Bildaufnahmeeinheit, die den Fingerabdruck des Benutzers aufzeichnet und mit einem oder mehreren im Endgerät gespeicherten Fingerabdrücken von berechtigten Benutzern vergleicht. Hierdurch entfällt einerseits der zusätzliche Aufwand für eine Chipkarte, die eine umständliche Bedienung erfordert und außerdem verloren werden kann. Auch gegenüber einer persönlichen Geheimzahl ergibt sich der Vorteil, daß der Fingerabdruck immer verfügbar ist und ein Mißbrauch vollkommen ausgeschlossen werden kann. Dadurch, daß die Bildaufnahmeeinheit im Bereich eines Ein-/Ausschalters-Endgeräts angeordnet ist, ergibt sich eine Aktivierung von Diensten mit Zugangsberechtigung automatisch beim Betätigen des jeweiligen Ein-/Ausschalters des Endgeräts. Ein zusätzlicher Aufwand für den Benutzer entsteht somit nicht.

Eine Verwaltung von verschiedenen Benutzern bzw. Benutzergruppen wird dadurch sichergestellt, daß das Endgerät eine Anzeigevorrichtung aufweist, die zur Anzeige und Verwaltung von berechtigten Benutzern vorgesehen ist. Damit kann auf einfache Weise eine Benutzergruppenverwaltung herbeigeführt werden, wobei beispielsweise Kindern der Zugriff auf Erwachsenenkanäle versagt bleibt.

Vorteilhafte Anwendungsfälle für das Endgerät sind beispielsweise, daß das Endgerät eine Empfangseinrichtung zum Empfang von Fernsehsignalen, ein Multimedia-Endgerät, ein Videorecorder oder ein Telefongerät ist.

Im folgenden wird die Erfindung anhand der in den Figuren dargestellten Ausführungenbeispiele näher erläutert.

Es zeigen:
- Fig. 1: ein Fernsehgerät mit einer Ein-/Ausschaltevorrichtung mit Fingerabdruckerkennung,
- Fig. 2: ein Blockschaltbild für einen automatischen Authentisierungsvorgang mittels Fingerabdruck,
- Fig. 3: ein Telefongerät mit elektronischer Fingerabdruckerkennung.

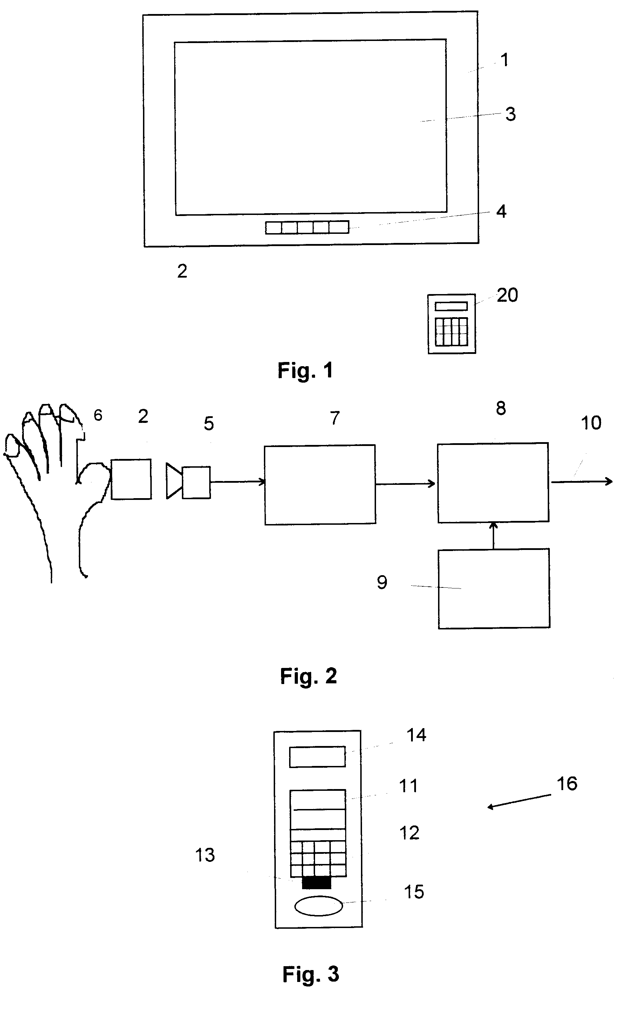

Das in Fig. 1 dargestellte Fernsehgerät ist zum Empfang von Diensten mit Zugangsberechtigung, beispielsweise von kostenpflichtigen Fernsehkanälen vorgesehen. Vom grundsätzlichen Aufbau entspricht das in Fig. 1 dargestellte Fernsehgerät im wesentlichen einem konventionellen Fernsehgerät. Das Fernsehgerät 1 weist einen Bildschirm 3 sowie eine Bedieneinheit 4 mit integrierter Ein-/Ausschaltevorrichtung 2 auf. Im Bereich der Ein-/Ausschaltevorrichtung 2 ist eine Bildaufnahmeeinheit vorgesehen, die beim Einschalten des Fernsehgerät 1 den Fingerabdruck eines Benutzers detektiert und mit einem in dem Fernsehgerät gespeicherten Fingerabdruck vergleicht.

Mit Hilfe des in Fig. 1 dargestellten Fernsehempfängers ist es somit möglich, allein durch das Einschalten, d.h. durch Betätigung des Ein-/Ausschalters eine Zugangsberechtigung zu kostenpflichtigen Diensten zu erhalten, sofern der Fingerabdruck des Benutzers mit den im Fernsehempfänger gespeicherten Fingerabdrücken übereinstimmt. Wird die Fernsehempfangseinrichtung 1 von mehreren Benutzern benutzt, so kann bei der Installation des Fernsehgeräts 1 eine Definition verschiedener Benutzergruppen festgelegt werden. Eine derartige Verwaltung der Benutzergruppen kann mit Hilfe der Anzeigeeinrichtung 3, d.h. dem Bildschirm erfolgen, auf dem menuegesteuert mittels der Bedieneinheit 4 bzw. mittels einer zugeordneten Fernbedienung 20 die Zuordnung der einzelnen Fingerabdrücke zu verschiedenen Benutzergruppen erfolgen kann. So kann als Benutzergruppenverwaltung beispielsweise eine Benutzergruppe für Kinder definiert werden, denen der Zugriff auf bestimmte Erwachsenenkanäle bzw. auf bestimmte Gewaltsendungen untersagt ist, während vollautorisierte Benutzer den vollen Zugriff auch auf die einer Zugangsberechtigung unterliegenden Dienste aufweisen. Nicht identifizierbare Benutzer haben beispielsweise dann nur Zugriff auf nicht kostenpflichtige Dienste. Mit Hilfe des in Fig. 1 dargestellten Fernsehgeräts ist es somit möglich, daß allein durch das Einschalten des jeweiligen Benutzers eine entsprechende Zugangsberechtigung erfolgt. Ein derartiges Endgerät ermöglicht somit im Gegensatz beispielsweise zu einer Chipkarte im bestimmten Umfang die Erweiterung der Benutzerdatenbank. So kann der Zugriff beispielsweise von Familienmitgliedern den jeweiligen Erfordernissen angepaßt werden, ohne daß beim entsprechenden Diensteanbieter eine Änderung der Kartenberechtigung angefordert werden muß.

Fig. 2 zeigt ein Blockschaltbild für die automatische Authentisierung mittels elektronischem Fingerabdruck, wie sie beispielsweise im Zusammenhang mit den in Fig. 1 dargestellten Fernsehempfangsgerät Verwendung finden kann. Das Blockschaltbild besteht aus einem Ein-/Ausschalter 2, hinter dem eine Bildaufnahmeeinheit 5 angeordnet ist. Die Bildaufnahmeeinheit 5 dient zur Aufnahme des Fingerabdrucks 6 eines Benutzers beim Einschaltvorgang. Die Signale der Bildaufnahmeeinheit 5 werden einer Signalverarbeitungseinrichtung 7 zugeführt, die die aufgenommenen Signale beispielsweise binarisiert und an eine Vergleichseinrichtung 8 (Korrelationseinrichtung) zuführt. Die Vergleichseinrichtung 8 vergleicht die von Signalverarbeitungseinrichtung gelieferten Signale mit Signalen eines in einem Speicher 9 gespeicherten Fingerabdrucks. Am Ausgang der Vergleichseinrichtung 8 liegt dann jeweils ein Steuerungssignal 10, das eine Freigabe zu einem Dienst mit einer Zugangsberechtigung auslöst oder nicht.

Die Ein-/Ausschaltvorrichtung 2 ist beispielsweise als großflächiger Schalter mit der Bildaufnahmeeinheit 5 gekoppelt. Die Bildaufnahmeeinheit 5 kann als Miniaturkamera oder als CCD-Flächensensor mit entsprechender Ansteuerung ausgeführt werden. Im Moment des Einschaltens wird der Fingerabdruck 6 des Benutzers genommen und anschließend mit der Datenbank (= Speicher 9) verglichen, wobei zur Durchführung des Vergleichs eine Signalvorverarbeitung, im einfachsten Falle eine Binarisierung, sowie eine Korrelationsschaltung in Form der Vergleichseinrichtung 8 notwendig ist. Die in Fig. 2 dargestellte Authentisierung benötigt keine Zusatzmittel wie Chipkarten. Hierdurch wird die Gefahr der Fehlbenutzung durch Verlust oder Diebstahl, auch innerhalb einer Familie deutlich herabgesetzt. Es besteht vielmehr ein direkter Zusammenhang zwischen der Benutzung, d.h. dem Ein-/Ausschalten und der Authentisierung. Bei längerer Nichtbenutzung des Endgeräts z.B. im Standby-Betrieb kann die authentisierung automatisch zurückgesetzt werden, d.h. eine Aktivierung von Diensten mit Zugangsberechtigung ist in diesem Fall erst nach erneutem Einschaltvorgang möglich.

Die in den Fig. 1 und 2 beschriebene Authentisierung kann bei jeder Art von Multimedia-Endgeräten zum Einsatz kommen, wo eine Zugangsberechtigung zu bestimmten Diensten benötigt wird und gleichzeitig die Inbetriebnahme des Endgeräts durch ein Einschalten des Geräts erfolgt. Dies sind im wesentlichen TV-Empfangseinrichtungen, z.B. in Form von Satellitenempfängern sowie Videorecorder zur Wiedergabe von Programmen oder Diensten. Die Erfindung ist jedoch nicht auf dieses Gebiet beschränkt, wie anhand des in Fig. 3 gezeigten Ausführungsbeispiels noch erläutert wird.

Fig. 3 zeigt ein weiteres Ausführungsbeispiel eines erfindungsgemäßen Endgeräts. Bei dem Endgerät in Fig. 3 handelt es sich um ein Mobilfunktelefon 16, das die üblichen zur Benutzung und Bedienung des Telefons notwendigen Komponenten aufweist. So weist das Mobilfunkgerät 16 eine Bedieneinheit 12, einen Ein-/Ausschalter 13 sowie Mikrofon 15, Lautsprecher 16 und eine Anzeigeeinrichtung 11 auf.

Das in Fig. 3 dargestellte Mobilfunktelefon 16 enthält die selben funktionalen Einheiten eines konventionellen Mobilfunkgeräts, lediglich zur Zugangsberechtigung zu den jeweiligen Funkdiensten weist das Funkgerät eine automatische Authentisierung auf, die im Bereich des Ein-/Ausschalters 13 angeordnet ist und die die im Zusammenhang mit Fig. 2 erläuterte Funktionsweise enthält.

Somit wird es mit Hilfe der Erfindung auch im Zusammenhang mit einem Mobiltelefon möglich, auf den Einsatz einer Berechtigungskarte mit ggfs. Geheimnummer zu verzichten, ohne daß die Gefahr eines Mißbrauchs vergrößert ist.

## Patentansprüche

1. Endgerät (1) zur Teilnahme an Diensten, die einer Zugangsberechtigung unterliegen, mit Mitteln (5, 7, 8, 9, 10) zur Aktivierung der Zugangsberechtigung, die eine im Bereich eines Ein-/Ausschalters (2) des Endgeräts (1) angeordnete Bildaufnahmeeinheit (5) zur Aufnahme des Fingerabdrucks (6) eines Benutzers und eine Vergleichseinrichtung (8) zum Vergleich des aufgenommenen Fingerabdrucks (6) mit einen in einem Speicher (9) gespeicherten Fingerabdruck aufweisen, wobei eine Aktivierung von Diensten mit Zugangsberechtigung beim Betätigen des Ein-/Ausschalters (2) erfolgt.

2. Endgerät nach Anspruch 1,
**dadurch gekennzeichnet,**
daß das Endgerät (1) eine Anzeigevorrichtung (3) aufweist, die zur Anzeige und Verwaltung von berechtigten Benutzern vorgesehen ist.

3. Endgerät nach einem der Ansprüche 1 oder 2,
**dadurch gekennzeichnet**,
daß das Endgerät (1) eine Empfangseinrichtung zum Empfang von Fernsehsignalen, ein Multimedia-Endgerät, ein Videorecorder oder ein Telefongerät (16) ist.
